(19) **European Patent Office**
Europäisches Patentamt
Office européen des brevets

(11) **EP 1 379 603 B1**

(12) **EUROPEAN PATENT SPECIFICATION**

(45) Date of publication and mention
of the grant of the patent:
**21.12.2005 Bulletin 2005/51**

(51) Int Cl.7: **C09K 11/86**

(86) International application number:
**PCT/GB2002/000590**

(21) Application number: **02711057.6**

(22) Date of filing: **11.02.2002**

(87) International publication number:
**WO 2002/083814 (24.10.2002 Gazette 2002/43)**

(54) **ALKALI EARTH ALUMINATE-SILICATE PHOTOLUMINESCENT PIGMENT WHICH IS ACTIVATED BY RARE-EARTH ELEMENTS**

DURCH SELTENERD-ELEMENTE AKTIVIERBARES PHOTOLUMINESZENZPIGMENT AUS ERDALKALIALUMINATSILICAT

PIGMENT PHOTOLUMINESCENT DE SILICATE D'ALUMINATE ALCALINO TERREUX ACTIVE PAR DES ELEMENTS DE TERRE RARE

(84) Designated Contracting States:
**AT BE CH CY DE DK ES FI FR GB GR IE IT LI LU MC NL PT SE TR**

(30) Priority: **18.04.2001 GB 0109529**

(43) Date of publication of application:
**14.01.2004 Bulletin 2004/03**

(73) Proprietor: **Shandong Lunbo Ind. & Comm. Group Co Limited**
**Jinan, Shandong (CN)**

(72) Inventors:
• **SUN, Zhao**
**Jinan, Shandong (CN)**
• **SU, Shi-Min**
**Jinan, Shandong (CN)**
• **ZHANG, Yu-Jun**
**Jinan, Shandong (CN)**
• **ZHU, Zhong-Li**
**Jinan, Shandong (CN)**

(74) Representative: **Küchler, Stefan**
**Patentanwalt**
**Postfach 11 93 40**
**90103 Nürnberg (DE)**

(56) References cited:
• **PATENT ABSTRACTS OF JAPAN vol. 016, no. 219 (C-0943), 22 May 1992 (1992-05-22) & JP 04 041585 A (NICHIA CHEM IND LTD), 12 February 1992 (1992-02-12)**

EP 1 379 603 B1

**Description**

This invention relates to the field of material science and is particularly related to a kind of alkali earth aluminate-silicate material having long photoluminescent afterglow properties which are activated by the rare-earth elements.

In recent years of development, the alkali earth aluminate photoluminescent materials activated by rare-earth elements were found to be favoured by most people for excellent properties and benefits such as, high initial luminescent intensity, long afterglow time and non-radioactivity. A few introductory reports and patents have been published on such photoluminescent materials. Chinese Patent Application No. CN 1126746A relates to a kind of alkali earth aluminate photoluminescent material that is activated by Eu, Ce, Tb and Dy. Chinese Patent Application No. CN 1115779A, relates to another kind of luminescent material that is activated by the rare-earth elements (Eu, Ce, Tb, Dy) and non rare-earth elements (Sb, Sn). Chinese Patent Application No. CN 1152018A relates to a kind of photoluminescent material and a preparation method for this material, with the general formula $M.N.Al_{2-x}B_xO_2$, in which M indicates an alkali earth metal - it is normally strontium (Sr); N indicates a rare-earth element - it is normally europium (Eu), and in which $0.1 \le X \le 1$. Chinese Patent Application No. CN1132777A, US Patent 5424006, US Patent 5686022, EP 0622440 and EP 0710709 A1, relate to an alkali earth aluminate luminescent material and its preparation method. Chinese Patent Application No. CN 1194292 relates to a kind of silicate photoluminescent material and its preparation method, its main formula being $aMO.bM'O.cSiO_2.dR: Eu_x, Ln_y$ in which M is at least one element selected from strontium (Sr), calcium (Ca), barium (Ba), zinc (Zn); and M' is at least one element selected from magnesium (Mg), cadmium (Cd), beryllium (Be). Ln is selected from the rare-earth elements or transition elements. This luminescent material emits light in the optical spectrum where its peak values are in the 450-580 nm region. The colours of the light shown, with long afterglow, are blue, blue-green, green, green-yellow, and yellow etc.

For the above-mentioned alkaline earth aluminate luminescent materials activated by rare-earth elements, their sinters are very hard to crush. These luminescent materials appear alkaline in the aqueous medium because of the high alkaline metal oxide content, and also cannot be used directly in many cases. For example, when these luminescent materials are used directly in plastics or rubber, the luminescent products are susceptible to blacken or become grey. They often engender hydrolysis, causing precipitation when used in aqueous coating. It is difficult to form a stable coating system. When they are used in low-temperature ceramic paper or colour glass paper, it is also difficult to obtain a smooth surface because of their high aluminium oxide content. Furthermore, the luminescent intensity and afterglow time of the silicate luminescent material activated by rare-earth elements are much lower than those of the aluminate luminescent material are.

The aim of this invention is to overcome the shortcomings of all of the above-listed technologies available at present, by providing a preparation and production method of a new kind of alkali earth aluminate-silicate luminescent material which is activated by rare-earth elements and which is easy to handle and has many excellent qualities.

According to one aspect of the present invention there is provided an alkali earth aluminate-silicate photoluminescent material which is activated by rare-earth elements and which has the composition $MO.aAl_2O_3bSiO_2cL: fX$, in which MO is at least one oxide from the selection SrO, CaO, MgO and BaO; L is a mineraliser, X is a rare earth element activator; a, b, c and f are variable factors of $Al_2O_3$, $SiO_2$, mineraliser L and activator X and are presented in terms of mole and have a mole ratio relationship with MO in which the mole value of MO = 1, the variable factors being:

$$0.3 \le (a+b) \le 3, \quad b = (0.01\sim2)a, \quad c = 0.02\sim0.5, \quad f = 0.001\text{-}0.05$$

whereby the mineraliser L contains an ammonium halide salt.

Preferably, the rare-earth element activator X is europium oxide and at least one oxide selected from a selection of dysprosium oxide, cerium oxide, neodymium oxide, praseodymium oxide, samarium oxide, terbium oxide, holmium oxide, erbium oxide, thulium oxide and ytterbium oxide, having a mole ratio relationship of 1 : (0.5-5).

The ammonium halide salt of the mineraliser L is preferably ammonium chloride or ammonium bromide.

Another aspect of the invention provides a method of preparing the above-mentioned aluminate-silicate photoluminescent material which is activated by rare-earth elements, said method includig the steps of selecting and weighing an alkali earth metal carbonate or oxide, aluminium oxide or aluminium hydrate and silicia powder, in which $0.3 \le (a+b) \le 3$, $b = (0.01 \sim 2)a$, $c = 0.02\text{-}0.5$, $f = 0.001\sim0.05$, together with elements for the mineraliser L and activator X. mixing the ingredients and then putting the mixture into a crucible to fire at a temperature range of 1200 - 1450°C for 2 - 4 hours under a reducing atmosphere, to yield a sinter, the sintered material then being crushed, ground and graded, washed with de-ionised water, diluted hydrochloric acid solution or alcohol and dried by heat, finally to produce an alkali earth aluminate-silicate photoluminescent pigment which is activated by rare-earth elements.

Preferably, the reducing atmosphere is a selection and/or combination of gases or substances such as hydrogen, ammonia, nitrogen with hydrogen and carbon granules.

By following the method according to the invention, it is possible successfully to manufacture a novel type of photoluminescent material pigments by choosing a suitable combination of aluminate-silicate matrix materials, rare-earth elements for the activator, and the right materials for the mineraliser.

The produced sinter is easy to crush in photoluminescent pigment production. The pigment appears neutral in water. With 15 seconds of light excitation, the luminescent intensity of produced pigment materials could reach 1800 med/m$^2$, and its afterglow time can last for more than 12 hours. The main peaks of its luminance could be seen in the variable range between 440 nm to 510 nm in the optical spectrum, subject to different choices of ingredients. The luminescent intensity and afterglow time of the said photoluminescent materials have been measured in accordance with the requirements of DIN67510.

Compared with the above listed technology available at present, the pigment material according to the present invention is far superior in terms of manufacture, is convenient to use and very easy to handle. The problems encountered in luminescent plastic and rubber production as described above are overcome in methods of injection, extrusion and filming. Many quality products such as luminescent plastic, luminescent rubber, luminescent ceramic glaze, luminescent enamel glaze, luminescent colour paper, luminescent coatings, etc can be easily produced by means of the photoluminescent pigments of the present invention.

The invention will now be explained in greater detail with reference to the following examples but it should be noted that the scope of pigment categories is not limited by these examples.

For the ease of explanation, all following examples use the same composite formula described above for the alkali earth aluminate-silicate photoluminescent material pigments activated by rare-earth elements

$$MO.aAl_2O_3.bSiO_2cL : fX,$$

In which MO is SrO and/or CaO, or BaO or MgO; the terms $Al_2O_3$ and $SiO_2$ may also vary; materials for the mineraliser L and rare-earth element activator X are individually selected, with unique mole ratio relationships in each case.

Example I The Blue-Violet Colour Pigment:

For the composition formula $Mo.aAl_2O_3bSiO_2.cL: fX$, in which MO is SrO and CaO; L is ammonium chloride $NR_4Cl$, X is europium oxide $Eu_2O_3$, dysprosium oxide $Dy_2O_3$, and neodymium oxide $Nd_2O_3$ having the mole ratio of 1:2 ~ 1.8, a = 0.96, b = 0.4, c = 0.2, f = 0.012.

The preparation and production method:

The following ingredients are weighed and mixed thoroughly:

$SrCO_3$ 5.73g, $CaCO_3$ 35.00g, $Al_2O_3$ extra fine powder 38.02g, $SiO_2$ fine powder 9.33g, $(NH_4)_2HPO_4$ 10.26g, $Eu_2O_3$ 0.34g, $Dy_2O_3$ 0.73g and $Nd_2O_3$ 0.59g.

The resultant mixture is then put into a crucible to fire at a temperature of 1280°C for 2 hours under a reducing atmosphere (filled with combined nitrogen with hydrogen), to yield the sinter. The sinter is then crushed, ground and graded, washed by alcohol and dried by heat to produce the photoluminescent pigment. The alkali earth aluminate-silicate photoluminescent material pigment manufactured by this method has a blue-violet colour, showing a luminescent intensity of 100mcd/m$^2$ (1 minute after light excitation), with afterglow time of some 10 hours, its luminescent spectrum $_{max}$ peaks at 440 nm, and appears neutral in water.

Example II The Blue Colour Pigment:

For the composition formula $MO.aAl_2O_3.bSiO_2.cL: fX$, in which MO is SrO and MgO; L is ammonium chloride $NH_4Cl$, X is europium oxide $Eu_2O_3$ and dysprosium oxide $Dy_2O_3$ having the mole ratio of 1 : 5 a = 0.01, b = 1.5 c =0.35, f = 0.008.

The preparation and production method:

The following ingredients are weighed and mixed thoroughly:

$SrCo_3$ 52.62g, MgO 7.20g, $Al_2O_3$ extra fine powder 0.36g, $SiO_2$ fine powder 32.10g, $NH_4Cl$ 6.67g. $Eu_2O_3$, 0.19 g and $Dy_2O_3$ 0.86 g.

The resultant mixture is then put into a crucible to fire at a temperature of 1250°C for 2.5 hours under a reducing atmosphere (filled with ammonia), to yield the sinter. The sinter is then crushed, ground and graded, washed by alcohol and dried by heat to produce the photoluminescent pigment. The alkali earth aluminate-silicate photoluminescent material pigment manufactured by this method has a blue colour, showing a luminescent intensity of 180 mcd/$m^2$ (1 minute after light excitation), with afterglow time of more than 12 hours, its luminescent spectrum $_{max}$ peaks at 460 nm, and appears neutral in water.

Example III The Light Blue-Green Colour Pigment:

For the composition formula $MO.aAl_2O_3.bSiO_2.cL : fX$, in which MO is SrO, CaO and MgO, L is ammonium bromide $NH_4Br$, X is europium oxide $Eu_2O_3$, and dysprosium oxide $Dy_2O_3$ having the mole ratio of 1:5, a = 0.01, b =1.0, c = 0.35, f = 0.008.
The preparation and production method:
The following ingredients are weighed and mixed thoroughly:

$SrCo_3$ 36.00g, $CaCO_3$ 16.27g, MgO 8.19g, $Al_2O_3$ extra fine powder 0.41g, $SiO_2$ fine powder 24.00g, $NH_4Br$ 13.93g, $Eu_2O_3$ 0.22g and $Dy_2O_3$ 0.98g.

The resultant mixture is then put into a crucible to fire at a temperature of 1250°C for 2 hours under a reducing atmosphere (filled with combined nitrogen with hydrogen), to yield the sinter. The sinter is then crushed, ground and graded, washed by alcohol and dried by heat to produce the photoluminescent pigment. The alkali earth aluminate-silicate photoluminescent material pigment manufactured by this method has a blue-green colour, showing a luminescent intensity of 1800 mcd/$m^2$ (1 minute after light excitation), with afterglow time of more than 10 hours, its luminescent spectrum $_{max}$ peaks at 500 mm, and appears neutral in water.

Example IV The Blue - Green Colour Pigment:

For the composition formula $MO.aAl_2O_3.bSiO_2.cL : fX$, in which MO is SrO, L is ammonium chloride $NH_4Cl$ and boric oxide $B_2O_3$ with mole ratio 1:02, X is europium oxide $Eu_2O_3$ and dysprosium oxide $Dy_2O_3$ having the mole ratio of 1 : 1, a = 0.98, b = 0.02, c = 0.35, f = 0.01.
The preparation and production method:
The following ingredients are weighed and mixed thoroughly:

$SrCO_3$ 54.29g, $Al_2O_3$ extra fine powder 36.74g, $SiO_2$ fine powder 0.44 g, $NH_4Cl$ 4.92g, $H_3BO_3$ 2.27g, $Eu_2O_3$ 0.65g and $Dy_2O_3$ 0.69g.

The resultant mixture is then put into a crucible to fire at a temperature of 1300°C for 3 hours under a reducing atmosphere (filled with combined nitrogen with hydrogen), to yield the sinter. The sinter is then crushed, ground and graded, washed by alcohol and dried by heat to produce the photoluminescent pigment. The alkali earth aluminate-silicate photoluminescent material pigment manufactured by this method has a blue-green colour, showing a luminescent intensity of 2300 mcd/$m^2$ (1 minute after light excitation), with afterglow time of more than 12 hours, its luminescent spectrum $_{max}$ peaks at 510 mm, and appears neutral in water.

**Claims**

1. An alkali earth aluminate-silicate photoluminescent material which has long photoluminescent afterglow properties and is activated by rare-earth elements and which has the composition $MO.aAl_2O_3.bSiO_2.cL : fX$, in which MO is at least one oxide from the selection SrO, CaO, MgO and BaO; L is a mineraliser, X is a rare earth element activator, a, b, c and f are variable factors of $Al_2O_3$, $SiO_2$, mineraliser L and activator X and are presented in terms of mole and have a mole ratio relationship with MO in which the mole value of MO = 1, the variable factors being:

$$0.3 \leq (a+b) \leq 3, b = (0.01\sim2) a, c = 0.02\sim0.5, f = 0.001\sim0.05$$

whereby the mineraliser L contains an ammonium halide salt.

2. An alkali earth aluminate-silicate photoluminescent material according to claim 1, **characterized in that** the rare-earth element activator X is europium oxide and at least one oxide selected from a selection of dysprosium oxide, cerium oxide, neodymium oxide, praseodymium oxide, samarium oxide, terbium oxide, holmium oxide, erbium oxide, thulium oxide and ytterbium oxide; having the mole ratio relationship of 1: (0.5-5).

3.  An alkali earth aluminate-silicate photoluminescent material according to claim 1 or claim 2, **characterized in that** the rare-earth element activator X is europium oxide and dysprosium oxide having a mole ratio relationship of 1: (1~2).

4.  An alkali earth aluminate-silicate material according to any one of the preceeding claims, **characterized in that** the ammonium halide salt is ammonium chloride or ammonium bromide.

5.  A method of preparing an alkali earth aluminate-silicate photoluminescent material which is activated by rare-earth elements having the formula claimed in claim 1, said method including the steps of selecting and weighing an alkali earth metal carbonate or oxide, aluminium oxide or aluminium hydrate and silica powder, in which $0.3 \leq (a+b) \leq 3$, $b = (0.1 - 2)a$, $c = 0.02{\sim}0.5$, $f = 0.001{\sim}0.05$, together with elements for the mineraliser L and activator X, mixing the ingredients and then putting the mixture into a crucible to fire at a temperature range of 1200 ~ 1450°C for 2 - 4 hours under a reducing atmosphere, to yield a sinter, the sintered material then being crushed, ground and graded, washed with de-ionised water, diluted hydrochloric acid solution or alcohol and dried by heat, finally to produce an alkali earth aluminate-silicate photoluminescent pigment which is activated by rare-earth elements.

6.  A method according to claim 5, wherein the reducing atmosphere is a selection and/or combination of gases or substances such as hydrogen, ammonia, nitrogen with hydrogen, and carbon granules.

**Patentansprüche**

1.  Photolumineszentes Material aus Erdalkalialuminiumsilicat, welches die Eigenschaft eines langen photolumineszenten Nachleuchtens aufweist und durch Seltenerd-Elemente aktiviert wird und die Zusammensetzung MO. $aAl_2O_3.bSiO_2.cL$: fX hat, wobei MO wenigstens ein Oxid aus der Gruppe SrO, CaO, MgO und BaO ist; L ein Mineralbildner ist, X ein Aktivator aus Seltenerd-Elementen ist, wobei außerdem a, b, c und f variable Faktoren von $Al_2O_3$, $SiO_2$, Mineralbildner L und Aktivator X sind und als Mol angegeben sind und in einem Molverhältnis zu MO stehen, bei dem der Mol-Wert von MO = 1 ist, und wobei ferner die variablen Faktoren wie folgt definiert sind:

$$0,3 \leq (a+b) \leq 3, \; b = (0,01{\sim}2)\,a, \; c = 0,02{\sim}0,5, \; f = 0,001{\sim}0,05$$

und wobei schließlich der Mineralbildner L ein Ammoniumhalogenidsalz enthält.

2.  Photolumineszentes Material aus Erdalkalialuminiumsilicat nach Anspruch 1, **dadurch gekennzeichnet, dass** der aus Seltenerd-Elementen gebildete Aktivator X aus Europiumoxid besteht sowie aus wenigstens einem Oxid, ausgewählt aus einer Gruppe bestehend aus Dysprosiumoxid, Ceroxid, Neodymoxid, Praseodymoxid, Samariumoxid, Terbiumoxid, Holmiumoxid, Erbiumoxid, Thuliumoxid und Ytterbiumoxid, mit dem Molverhältnis 1 : (0,5~5).

3.  Photolumineszentes Material aus Erdalkalialuminiumsilicat nach Anspruch 1 oder 2, **dadurch gekennzeichnet, dass** der aus Seltenerd-Elementen gebildete Aktivator X aus Europiumoxid und aus Dysprosiumoxid besteht, mit dem Molverhältnis 1 : (1~2).

4.  Photolumineszentes Material aus Erdalkalialuminiumsilicat nach einem der vorhergehenden Ansprüche, **dadurch gekennzeichnet, dass** das Ammoniumhalogenidsalz aus Ammoniumchlorid oder aus Ammoniumbromid besteht.

5.  Verfahren zur Herstellung eines durch Seltenerd-Elemente aktivierbaren, photolumineszenten Materials aus Erdalkalialuminiumsilicat mit der Formel nach Anspruch 1, wobei dieses Verfahren die folgenden Schritte umfaßt: Auswählen und Abwiegen eines Erdalkalimetallkarbonats oder -oxids, eines Aluminiumoxids oder Aluminiumhydrats und eines Siliziumoxidpulvers, wobei $0,3 \leq (a+b) \leq 3$, $b = (0,01{\sim}2)\,a$, $c = 0,02{\sim}0,5$, $f = 0,001{\sim}0,05$, zusammen mit Elementen für den Mineralbildner L und den Aktivator X, Mischen dieser Zutaten und Einfüllen der Mischung in einen Tiegel zum Brennen bei einer Temperatur aus dem Bereich von 1200 ~ 1450 °C für 2 - 4 Stunden unter einer reduzierenden Atmosphäre, um einen Sinter zu erhalten, sodann Brechen des gesinterten Materials, Mahlen und Einstufen desselben sowie Waschen mit de-ionisiertem Wasser, einer Lösung mit verdünnter Salzsäure oder Alkohol, und schließlich Trocknung mit Hitze, um schlußendlich ein durch Seltenerd-Elemente aktivierbares, photolumineszentes Pigment aus Erdalkalialuminiumsilicat herzustellen.

6. Verfahren nach Anspruch 5, wobei die reduzierende Atmosphäre eine Auswahl und/oder Kombination von Gasen oder Substanzen wie Wasserstoff, Ammoniak, Stickstoff mit Wasserstoff, und Kohlenstoffkörnchen umfaßt.

**Revendications**

1. Matériau photoluminescent d'aluminate-silicate alcalino-terreux qui possède des propriétés de longue rémanence photoluminescente et est activé par des éléments de terres rares et qui a la composition suivante: $MO.aAl_2O_3.bSiO_2.cL:fX$, dans laquelle MO est au moins un oxyde choisi parmi la sélection SrO, CaO, MgO et BaO; L est un minéralisateur, X est un activateur d'élément de terre rare, a, b, c et f sont des facteurs variables de $Al_2O_3$, $SiO_2$, du minéralisateur L et de l'activateur X et sont présentés en mole et ont une relation de rapport molaire avec MO dans laquelle la valeur molaire de MO = 1, les facteurs variables étant:

$$0,3 \leq (a+b) \leq 3, \, b = (0,01{\sim}2) \, a, \, c = 0,02{\sim}0,5, \, f = 0,001{\sim}0,05$$

où le minéralisateur L contient un sel halogénure d'ammonium.

2. Matériau photoluminescent d'aluminate-silicate alcalino-terreux selon la revendication 1, **caractérisé en ce que** l'activateur d'élément de terre rare X est l'oxyde d'europium et au moins un oxyde choisi parmi une sélection d'oxyde de dysprosium, d'oxyde de cérium, d'oxyde de néodyme, d'oxyde de praséodyme, d'oxyde de samarium, d'oxyde de terbium, d'oxyde d'holmium, d'oxyde d'erbium, d'oxyde de thulium et d'oxyde d'ytterbium; ayant la relation de rapport molaire de 1:(0,5~5).

3. Matériau photoluminescent d'aluminate-silicate alcalino-terreux selon la revendication 1 ou la revendication 2, **caractérisé en ce que** l'activateur d'élément de terre rare X est l'oxyde d'europium et l'oxyde de dysprosium ayant une relation de rapport molaire de 1:(1~2).

4. Matériau d'aluminate-silicate alcalino-terreux selon l'une quelconque des revendications précédentes, **caractérisé en ce que** le sel halogénure d'ammonium est le chlorure d'ammonium ou le bromure d'ammonium.

5. Procédé de préparation d'un matériau photoluminescent d'aluminate-silicate alcalino-terreux qui est activé par des éléments de terres rares répondant à la formule revendiquée dans la revendication 1, ledit procédé incluant les étapes consistant à sélectionner et peser un carbonate ou oxyde de métal alcalino-terreux, l'oxyde d'aluminium ou l'hydrate d'aluminium et la poudre de silice, où $0,3 \leq (a+b) \leq 3$, $b = (0,01{\sim}2)$ a, $c = 0,02{\sim}0,5$, $f = 0,001{\sim}0,05$, conjointement avec les éléments du minéralisateur L et de l'activateur X, mélanger les ingrédients et ensuite placer le mélange dans un creuset pour cuire à un intervalle de températures de 1200~1450°C pendant 2 à 4 heures dans une atmosphère réductrice, pour donner un aggloméré, le matériau aggloméré étant ensuite concassé, broyé et calibré, lavé avec de l'eau déminéralisée, une solution diluée d'acide chlorhydrique ou de l'alcool et séché à la chaleur, pour produire finalement un pigment photoluminescent d'aluminate-silicate alcalino-terreux qui est activé par des éléments de terres rares.

6. Procédé selon la revendication 5, dans lequel l'atmosphère réductrice est une sélection et/ou une combinaison de gaz ou de substances comme l'hydrogène, l'ammoniac, l'azote avec l'hydrogène, et de grenailles de charbon.